(19) Europäisches Patentamt
European Patent Office
Office européen des brevets

(11) EP 4 574 793 A1

(12) EUROPEAN PATENT APPLICATION

(43) Date of publication:
**25.06.2025 Bulletin 2025/26**

(21) Application number: **23218881.3**

(22) Date of filing: **20.12.2023**

(51) International Patent Classification (IPC):
***C04B 28/04*** *(2006.01)* ***C04B 28/10*** *(2006.01)*
***C04B 28/12*** *(2006.01)* ***C04B 111/00*** *(2006.01)*
***C04B 111/27*** *(2006.01)* ***C04B 111/60*** *(2006.01)*
***C04B 111/72*** *(2006.01)* ***C04B 20/00*** *(2006.01)*
***C04B 103/00*** *(2006.01)* ***C04B 40/06*** *(2006.01)*
***C04B 18/14*** *(2006.01)* ***C04B 14/14*** *(2006.01)*
***C04B 14/16*** *(2006.01)* ***C04B 14/04*** *(2006.01)*
***C04B 18/08*** *(2006.01)* ***C04B 14/12*** *(2006.01)*
***C04B 14/10*** *(2006.01)* ***C04B 18/10*** *(2006.01)*
***C04B 14/08*** *(2006.01)* ***C04B 14/22*** *(2006.01)*
***C04B 14/28*** *(2006.01)*

(52) Cooperative Patent Classification (CPC):
(C-Sets available)
**C04B 28/04; C04B 28/10; C04B 28/12;**
C04B 2111/00482; C04B 2111/00517;
C04B 2111/00637; C04B 2111/27; C04B 2111/60;
C04B 2111/72 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Ecocem Materials Limited**
**Dublin 3 D03E0C0 (IE)**

(72) Inventors:
- **ALFANI, Roberta**
  **75012 PARIS (FR)**
- **KACI, Yasmine**
  **75012 PARIS (FR)**

(74) Representative: **Plasseraud IP**
**104 Rue de Richelieu**
**CS92104**
**75080 Paris Cedex 02 (FR)**

# (54) HIGH FILLER CONTENT HYDRAULIC BINDER FOR BUILDING MATERIALS WITH A REDUCED WATER DEMAND

(57) The invention concerns a hydraulic binder composition, for dry building materials, having a $d_{10}$ less than or equal to 1µm, a $d_{50}$ comprised between 3.5µm and 4.5 µm and a $d_{85}$ comprised between 12µm and 15µm, and comprising:
a. between 1% and 40% in dry weight of at least one or lime source;
b. between 5% and 69% in dry weight of at least one supplementary cementitious material;
c. between 30% and 90% in dry weight of at least one filler;
d. between 0.1 % and 5% in dry weight, relative to the total weight of components a, b and c, of sulfate;
said filler being a particles mixture of:
- between 1% and 25% in dry weight, in respect with the total weight of the filler, of particles having a $d_{50}$ greater than or equal to 0,05µm and strictly less than 2µm,
- between 75% and 99% in dry weight, in respect with the total weight of the filler, of particles having a $d_{50}$ greater than or equal to 2µm and less than 200µm.

EP 4 574 793 A1

(52) Cooperative Patent Classification (CPC): (Cont.)

C-Sets
**C04B 28/04, C04B 20/008, C04B 2103/0088,
C04B 40/0608;
C04B 28/04, C04B 20/008, C04B 2103/0088,
C04B 40/0608, C04B 18/141, C04B 18/142,
C04B 14/14, C04B 14/16, C04B 14/047,
C04B 18/08, C04B 14/12, C04B 14/106,
C04B 18/101, C04B 14/08, C04B 14/22,
C04B 14/28, C04B 14/06, C04B 14/26,
C04B 14/285, C04B 18/167**

## Description

### Technical Field

This disclosure pertains to the field of hydraulic binder compositions comprising supplementary cementitious materials (SCM), for preparing building materials. In particular, the technical field of the invention relates to hydraulic mineral binders with high fillers content and low amount of any lime source, such as Portland clinker, cement according to EN 197-1, EN 197-5, EN 197-6 natural hydraulic lime, hydraulic lime, hydrated lime and in general any source of lime and where SCM include Ground Granulated Blast Furnace Slag (GGBS or slag) or any other pozzolanic material, which are used in compositions able to set and harden, such as building materials.

### Background Art

Portland cement production has a strong and negative impact on the environment due to the emissions of large quantities of carbon dioxide. The production of cement inherently generates $CO_2$ during the calcination of the raw materials at very high temperature (1450°C) in a kiln through decarbonation of the limestone (Eq. (1)):

$$CaCO_3\ (s) \rightarrow CaO\ (s) + CO_2\ (g) \qquad \text{(Eq. (1))}$$

In addition, carbon dioxide is released as a result of the combustion of the fossil fuels needed to heat the cement kiln. By adding the additional emissions of grinding, almost one ton of $CO_2$ per ton of Portland cement is obtained. Overall, the cement industry is responsible for about 7 to 9% of the global carbon dioxide emissions.

Moreover, handling Portland cement may lead to health issues (such as allergy) due in particular to its high alkalinity (pH higher than 13). In addition, hazardous elements as hexavalent Chromium (Cr (VI)) may be released upon kneading, which is also unhealthy for the workers when it gets in contact with the skin. Although Cr (VI) reducing agents (as ferrous sulfate) are normally included in the cement powder, their efficiency is limited in time. Building workers, in particular those in the third world, are not expected to often check the deadline related to such treatments.

Most current research on new binders aims to replace cement in various applications by binders with lower environmental impact. One route is through using resources without their expensive treatment, such as by-products from other industries (waste for one industry, but primary resource for others). This is the case of blast-furnace slag which is a by-product of iron industry. By grinding this product into fine powder (GGBS) one can obtain a cementitious material that can be used in partial substitution of cement or used alone by adding some chemical activators.

Blended hydraulic binders including SCM and limestone filler have been recently approved by the new standard EN 197-5 and they constitute an alternative low carbon solution compared to traditional cement with higher amount of clinker, such as CEM II.

Hydraulic binders based on high filler, SCM and low Portland clinker source, are becomes very efficient. However, although these hydraulic binders have a great impact on reducing $CO_2$ emissions, they require to be used with a low water content to fulfill final specifications in terms of mechanical performances and durability. Unfortunately, this is not possible for some building applications, like industrial mortars, where water in an important amount is needed to achieve the right consistency and workability for the application. It is important to note that the quantity of water needed is highly dependent on the type of building material application. Indeed, for instance, the workability, the fluidity, the setting time, or the plasticity required depend on purpose of the building material, so for example tile adhesive formulations may require a water addition different from a render application or a masonry one. Also, the quantity of water has an impact on the mechanical strength, that is very often a critical point at least at early ages when low Portland clinker-based binders are used for replacing traditional cement with higher Portland clinker content. For concrete and some building applications, a way to reduce the quantity of water needed is the use of a water reducing polymer, however, this solution is often inapplicable for some industrial mortars, especially since many often water reducing polymer are in liquid form and so not compatible with a dry-formulation. In addition, for some mortars like masonry mortars, the use of a water reducing polymer would increase the cost at a to high level and the final product (masonry mortar) would not be saleable. Hence, it would be beneficial to propose a hydraulic binder that allows to obtain a workable building material with required rheological properties, like consistency and workability, in a wide range of industrial mortar applications with a decrease in the quantity of water needed and even without any water reducer polymer addition.

### Summary

In this context, it is proposed a hydraulic binder composition, for dry building materials, having a $d_{10}$ less than or equal to 1$\mu$m, a $d_{50}$ comprised between 3.5$\mu$m and 4.5 $\mu$m and a $d_{85}$ comprised between 12$\mu$m and 15$\mu$m, and comprising:

a. between 1% and 40% in dry weight of at least one lime source;

b. between 5% and 69% in dry weight of at least one supplementary cementitious material;

c. between 30% and 90% in dry weight of at least one filler;

d. between 0.1% and 5% in dry weight, relative to the total weight of components a, b and c, of sulfate;

said filler being a particles mixture of:

- between 1% and 25% in dry weight, in respect with the total weight of the filler, of particles having a $d_{50}$ greater than or equal to 0,05μm and strictly less than 2μm,

- between 75% and 99% in dry weight, in respect with the total weight of the filler, of particles having a $d_{50}$ greater than or equal to 2μm and less than 200μm,

measurement of $d_{10}$, $d_{50}$ and $d_{80}$ being done by Laser diffraction analysis, also known as Laser diffraction spectroscopy, by means of Laser diffraction analyzer such as " SYMPATEC " and commercialized by the SYMPATEC company, with the dry way method.

In another aspect, it is proposed a dry building material, comprising between 0.5% and 60% in dry weight of the hydraulic binder composition mentioned above, and between 40% and 99.5% in dry weight of aggregates.

The invention also concerns a wet building material formulation comprising the dry building material mentioned above and water.

The invention is also directed to a hardened building material product obtained from the wet building material formulation mentioned above.

The invention further concerns a process for preparing the wet building material formulation mentioned above comprising a step of mixing with water, the hydraulic binder composition mentioned above, the hydraulic binder composition being prepared before the mixing step or in situ during the mixing step the different components of the hydraulic binder composition taken separately and/or under the form of premix(es) and at least one aggregate.

**Definitions**

According to the terminology of this text, the following non limitative definitions have to be taken into consideration:

"binder" refers to "hydraulic binder" meaning any material that hardens just by adding water, like cement.

Lime source is understood to be any source of lime including and not limiting to Portland clinker, cement, natural hydraulic lime, hydraulic lime, hydrated lime and in general any source of lime

"cement" is understood as meaning a powdery substance made for use in making building material such as industrial mortar or concrete. They are mineral binders. It refers to any ordinary cement and it includes Ordinary Portland Cement, blends of Ordinary Portland Cement, Pozzolanic materials and/or Filler and alkali-activated based cements.

"clinker" is understood as the main constituent phase of Ordinary Portland Cement obtained from the co-calcination of limestone and an aluminosilicate source.

Supplementary cementing materials (SCMs) are materials that contribute to the properties of hardened cement through hydraulic or pozzolanic activity.

"industrial mortar" and "concrete" refer to a material composed of binder(s), aggregates such as filler, sand and gravel, sand and other components, like admixtures.

"Dry building material composition" refers to a material composed of binder(s), aggregates such as sand and gravel and other components, like admixtures.

"Wet building material formulation" refers to a material composed of binder(s), aggregates such as sand and gravel and other components, like admixtures and water.

"Hardened building material product" refers to the hardened product obtained from wet building material formulation after reaction and evaporation of the water.

"$d_{10}$" gives the median size of the granulometric distribution of material's particles (usually in micrometers for cementation materials). It means that 10% of the particles have a size less than the $d_{10}$ number and 90% of the particles have a size greater than the $d_{10}$ number. The measurement of $d_{10}$ is done by Laser diffraction analysis, also known as Laser diffraction spectroscopy, by means of Laser diffraction analyzer such as "SYMPATEC" and commercialized by the SYMPATEC company, with the dry way method.

"$d_{50}$" gives the median size of the granulometric distribution of material's particles (usually in micrometers for cementation materials). It means that 50% of the particles have a size less than the $d_{50}$ number and 50% of the particles have a size greater than the $d_{50}$ number. The measurement of $d_{50}$ is done by Laser diffraction analysis, also known as Laser diffraction spectroscopy, by means of Laser diffraction analyzer such as "SYMPATEC" and commercialized by the SYMPATEC company, with the dry way method.

"$d_{85}$" gives the median size of the granulometric distribution of material's particles (usually in micrometers for cementation materials). It means that 85% of the particles have a size less than the $d_{85}$ number and 15% of the particles have a size greater than the $d_{85}$ number. The measurement of $d_{85}$ is done by Laser diffraction analysis, also known as Laser diffraction spectroscopy, by means of Laser diffraction analyzer such as " SYMPATEC " and commercialized by the SYMPATEC company, with the dry way method.

"$d_{90}$" gives the median size of the granulometric distribution of material's particles (usually in micrometers for cementation materials). It means that 90% of the particles have a size less than the $d_{90}$ number and 10% of the particles have a size greater than the $d_{90}$ number. The measurement of $d_{90}$ is done by Laser diffraction analysis, also known as Laser diffraction spectroscopy, by means of Laser diffraction analyzer such as " SYMPATEC " and commercialized by the SYMPATEC company, with the dry way method.

## Brief Description of Drawings

Other features, details and advantages will be shown in the following detailed description and on the figures, on which:

**Fig. 1**
[Fig. 1] is a graph showing the water demand of a binder according to the invention versus binders outside the invention.

**Fig. 2**
[Fig. 2] a bar diagram showing the adhesive strength of a tile adhesive according to the invention under several storage conditions.

**Fig. 3**
[Fig. 3] is a bar diagram showing the compressive strength of a bagged concrete according to the invention.

**Fig. 4**
[Fig. 4] is a bar diagram showing the compressive strength of a masonry mortar according to the invention.

**Fig. 5**
[Fig. 5] is a bar diagram showing the compressive strength and a bar diagram showing the adhesive strength of a repair mortar according to the invention.

**Fig. 6**
[Fig. 6] is a bar diagram showing the adhesive strength of a waterproofing membrane according to the invention.

**Fig. 7**
[Fig. 7] is a graph diagram the water taking of a waterproofing membrane according to the invention.

## Detailed description

*The hydraulic binder composition*

The hydraulic binder composition according to the invention is for building material. In the sense of the present disclosure, building material includes, in particular, concrete, especially bagged concrete and industrial mortars such as tile adhesive, coating, masonry mortar, repair mortar, render, bagged cement, joint, grouts, technical mortar, industrial mortars for floor covering or waterproofing membrane.

The hydraulic binder composition according to the invention has a $d_{10}$ less than or equal to 1μm, a $d_{50}$ comprised between 3.5μm and 4.5 μm and a $d_{85}$ comprised between 12μm and 15μm, and comprises:

a. between 1% and 40% in dry weight of at least one lime source;

b. between 5% and 69 % in dry weight of SCM;

c. between 30 % and 90% in dry weight of at least one filler;

d. between 0.1% and 5% in dry weight, relative to the total weight of components a, b and c, of sulfate;

said filler being a particles mixture of:

- between 1% and 25% in dry weight, in respect with the total weight of the filler, of particles having a $d_{50}$ greater than or equal to 0,05μm and strictly less than 2μm,
- between 75% and 99% in dry weight, in respect with the total weight of the filler, of particles having a $d_{50}$ greater than or equal to 2μm and less than 200μm, measurement of $d_{10}$, $d_{50}$ and $d_{80}$ being done by Laser diffraction analysis, also known as Laser diffraction spectroscopy, by means of Laser diffraction analyzer such as "SYMPATEC" and commercialized by the SYMPATEC company, with the dry way method.

*The particle size distribution*

The hydraulic binder composition according to the invention has a particle size distribution, in which the $d_{10}$ is less than or equal to 1μm, the $d_{50}$ is comprised between 3.5μm and 4.5 μm and the $d_{85}$ is comprised between 12μm and 15μm.

In some embodiments, the hydraulic binder composition has a $d_{90}$ comprised between 17μm and 20μm, measurement of $d_{90}$ being done by Laser diffraction analysis, also known as Laser diffraction spectroscopy, by means of Laser diffraction analyzer such as " SYMPATEC " and commercialized by the SYMPATEC company, with the dry way method.

In some embodiments, the hydraulic binder composition has a $d_{99}$ equal or less 38μm, measurement of $d_{99}$ being done by Laser diffraction analysis, also known as Laser diffraction spectroscopy, by means of Laser diffraction analyzer such as " SYMPATEC " and commercialized by the SYMPATEC company, with the dry way method.

*The component a*

The hydraulic binder composition according to the invention comprises between 1% and 40 % in dry weight of a component a, which is a lime source, preferably, between 3% and 35%, more preferably between 5% and 30%.

Preferably, the lime source is Portland cement, Portland clinker or lime, such as hydraulic lime, natural hydraulic lime, calcium hydroxide, slaked lime, quick lime and lime slurry, or a mixture thereof.

Typically, Portland clinker has a $D_{50}$ greater or equal to 11μm and a Blaine surface of less than or equal to 5500 $cm^2/g$, measurement of $D_{50}$ being done by Laser diffraction analysis, also known as Laser diffraction spectroscopy, by means of Laser diffraction analyzer such as " SYMPATEC " and commercialized by the SYMPATEC company, with the dry way method.

In case the lime source is Portland cement it is advantageous that at least a portion of the same is ultrafine cement having a $d_{50}$ lower than or equal to 8μm, preferably lower than or equal to 3.5μm, measurement of $d_{50}$ being done by Laser diffraction analysis, also known as Laser diffraction spectroscopy, by means of Laser diffraction analyzer such as " SYMPATEC " and commercialized by the SYMPATEC company, with the dry way method. This embodiment is advantageous since it allows obtaining increased compressive strength.

*The component b*

The binder composition according to the invention comprises between 5% and 69% in dry weight of a component b, which is at least one supplementary cementitious material preferably, between 10% and 60%, more preferably between 15% and 50%.

Supplementary cementing materials (SCMs) are materials that contribute to the properties of hardened cement through hydraulic or pozzolanic activity. In an embodiment, the supplementary cementitious material is selected in the group comprising, preferably consisting in, slag cement such as ground, granulated blast-furnace slag (GGBS), and pozzolanic material such as silica fumes, natural pozzolan, volcanic ash, pumice, zeolitized tuff, argilised tuff, fly ashes, calcinated schists, metakaolin, calcined clays in particular illite, bentonite, montmorillonite, smectite, biomass ashes, rice husk ashes, diatomaceous earth, waste glass powder, grounded opal, carbonated basic oxygen furnace slag, carbonated olivine, carbonated wollastonite and mixtures thereof.

In some embodiment, the supplementary cementitious material is GGBS. Different grade of GGBS can be used for the invention according to their particle size distribution and mixture of thereof. The GGBS may be standard GGBS, ultrafine GGBS or a mixture thereof. Ultrafine GGBS is composed of particles having a $d_{50}$ greater than or equal to 1 $\mu$m and strictly less than 5$\mu$m.

*The component c*

The binder composition according to the invention comprises between 30% and 90% in dry weight of a component d, which is a filler preferably, between 30% and 80%, more preferably between 40% and 70%, even more preferably between 50% and 60%.

A filler is an inorganic material finely granulated which is inert. In other words, a filler is not able to react with lime or cement, in the presence of water, so as to produce hydrates.

In an embodiment, the filler is a limestone filler, more preferably, the filler is a natural material sourcing from stonepit, such as calcite and its polymorphs, like aragonite or vaterite, marble powder, siliceous sands, recycled concrete fine aggregates and dolomite or precipitated calcium carbonates and mixtures thereof.

In another embodiment, the filler is biochar. Biochar is understood the solid residue obtained from the controlled thermal decomposition (pyrolysis) and gasification of biomass under limited oxygen notable control parameters are heating rate, temperature, feed rate, and residence time. Altering the aforementioned parameters and the choice and quality of feedstock affect the structure, chemical composition, and yield of biochar obtained. Biochar is black in color, but it displays a brown color when it is not concentrated, rich in carbon.

In yet another embodiment, the filler is a mixture of a limestone filler, as defined above and biochar.

According to the invention, the filler is a particles mixture of:

- between 1% and 25% in dry weight, in respect with the total weight of the filler, of particles having a $d_{50}$ greater than or equal to 0,05$\mu$m and strictly less than 2$\mu$m,

- between 75% and 99% in dry weight, in respect with the total weight of the filler, of particles having a $d_{50}$ greater than or equal to 2$\mu$m and less than 200$\mu$m.

This filler partition, in combination with the particle size distribution of the binder in a whole, allows obtaining a technical effect of reducing the water needed to form a paste when mixing water with the hydraulic binder composition according to the invention.

In some embodiments the filler is a particles mixture of:

- between 3% and 20%, preferably between 5% and 15%, more preferably between 8% and 12% in dry weight, in respect with the total weight of the filler, of particles having a $d_{50}$ greater than or equal to 0,05$\mu$m and strictly less than 2$\mu$m,

- between 80% and 97% preferably between 85% and 95%, more preferably between 88% and 92% in dry weight, in respect with the total weight of the filler, of particles having a $d_{50}$ greater than or equal to 2$\mu$m and less than 200$\mu$m.

It is surprising that the binder of the invention, presenting a fine particle size distribution and comprising a filler, a part of which (between 1 and 25 dry weight %) having a $d_{50}$ greater than or equal to 0,05$\mu$m and strictly less than 2$\mu$m. Indeed, it is a general thought that the finer the binder particles, the more water needed.

*The component d*

According to the invention, the binder composition further comprises between 0.1% and 5% in dry weight, relative to the total weight of components a, b and c, of sulfate.
The content of sulfate is determined in respect with the distribution of components a, b and c. In other words, the dry weight percentage of the sulfate is determined by considering that the sum of contents of components a, b and c represents 100% in dry weight.
Preferably, the sulfate is from sodium sulfate, potassium sulfate, calcium sulfate, anhydrite, recycling gypse or mixture thereof, more preferably, the sulfate is from anhydrite, which is a natural anhydride calcium sulfate.

*Optional other components*

The hydraulic binder composition may further comprise between up to 1 % in dry weight, relative to the total weight of components a, b and c, of at least one water reducer polymer.
The content of the water reducer polymer is determined in respect with the distribution of components a, b and c. In other words, the dry weight percentage of the water reducer polymer is determined by considering that the sum of contents of components a, b and c represents 100% in dry weight.
Preferably, the water reducing polymer is selected from the group consisting of lignosulfonate polymers, melamine sulfonate polymers, naphthalene sulfonate polymers, polycarboxylic acid ether polymers, copolymers derived from (meth)acrylic acid monomers like HPEG, IPEG and MPEG, copolymers derived from maleic acid monomers like APEG, polyoxyethylene phosphonates, vinyl copolymers like VPEG, zwitterionic polymers and mixtures thereof.
The hydraulic binder composition may also further comprise up to 5% in dry weight, preferably up to 3%, relative to the total weight of components a, b and c, of at least one activator different from d.
The content of the activator different from d is determined in respect with the distribution of components a, b and c. In other words, the dry weight percentage of the activator is determined by considering that the sum of contents of components a, b and c represents 100% in dry weight.
Preferably, the activator different from d is an alkaline metal salt, preferably sodium chloride, potassium chloride, calcium chloride, lithium chloride, sodium carbonate, potassium carbonate, lithium carbonate, magnesium carbonate, calcium formate, calcium nitrate, sodium nitrate, potassium nitrate, lithium nitrate, sodium nitrite, potassium nitrite, lithium nitrite, calcium nitrite, alkalin metal oxide, aluminium oxide, sodium thiocyanate, potassium thiocyanate, lithium thiocyanate, alkanolamines such as triethanolamine (TEA), triisopropanolamine (TIPA), diethanolamine (DEA) or mixture thereof, preferably calcium nitrate.
In another embodiment the activator can be a mix of any source of calcium aluminate cement, both amorphous and crystalline, and/or calcium sulfoaluminate cement.
The binder composition is advantageously enriched with one or several other components which are ingredients, notably functional additives preferably selected in the following list:

- *Water retention agent.*
  A water retention agent has the property to keep the water of mixing before the setting. The water is so trapped in the wet formulation paste which improves its bond. To some extent, the water is less absorbed by the support.
  The water retentive agent is preferably chosen in the group comprising: modified celluloses, modified guars, modified cellulose ethers and/or guar ether and their mixes, more preferably consisting of: methylcelluloses, methylhydroxypropylcelluloses, methylhydroxyethyl-celluloses and their mixes.

- *Rheological agent*
  The possible rheological agent (also named a "thickener") is preferably chosen in the group comprising, more preferably consisting in: starch ethers, cellulose ethers and/or gums (e.g. Welan guar xanthane, succinoglycans), modified polysaccharides -preferably among modified starch ethers-, polyvinylic alcohols, polyacrylamides, sepiolites, and their mixes.

- *Defoamer/Antifoams*
  The possible defoamer is preferably chosen in the group comprising, more preferably consisting in: polyether polyols and mixes thereof.

- *Biocide*
  The possible biocide is preferably chosen in the group comprising, more preferably consisting in: mineral oxides like zinc oxide and mixes thereof.

- *Pigment*
  The possible pigment is preferably chosen in the group comprising, more preferably consisting in: $TiO_2$, iron oxide and mixes thereof.

- *Flame retardant*
  Flame retardant (or flame proof agent) makes it possible to increase the fire resistance and/or to shrink the speed of flame spreading of the composition.

- *Air-entraining agents*
  Air-entraining agents (surfactants) are advantageously chosen in the group comprising, more preferably consisting in, natural resins, sulfated or sulfonated compounds, synthetic detergents, organic fatty acids and their mixes, preferably in the group comprising, more preferably consisting in the lignosulfonates, the basic soaps of fatty acids and their mixes, and, more preferably in the group comprising, more preferably consisting in the sulfonate olefins, the sodium lauryl sulfate and their mixes.

- *Retarders*
  Retarders are advantageously chosen in the group comprising, more preferably consisting in tartric acid and its salts: sodium or potassium salts, citric acid and its salts: sodium (trisodic citrate) and their mixes.

In addition, other components may be:

- *Plasticizers*
- *Fibres*
- *Dispersion powders*
- *Wetting agents*
- *Polymeric resins*
- *Complexing agents*
- *Drying shrinkage reducing agents based on polyols*
- *Lubricants.*

The total content of these optional other components in the binder composition is preferably comprised between 0,001% and 10% by weight of the total weight of the binder composition.

*The dry building material*

The invention also relates to dry building material, in particular, concrete, especially bagged concrete and industrial mortars such as tile adhesive, coating, masonry industrial mortar, repair industrial mortar, render, bagged cement, technical industrial mortar, industrial mortars for floor covering or waterproofing membrane, comprising at least one aggregate and the binder composition described above. The dry building material may eventually contain other admixtures and additions, like biochar.

According to the invention, "dry" building material refers to compositions that are in the form of powder and ready to be mixed with water. In other words, the dry building material of the invention may content some moisture, but it essentially contains solid components which are intended to be mixed with water before its application.

Aggregates comprise a large category of particulate material used in construction, including sands, gravels, crushed stones, slag (not-granulated), recycled concrete and geosynthetic aggregates. They serve as reinforcement to add strength to the overall composite material.

Advantageously, said dry building material composition can also include, apart from aggregates, one or several ingredients, especially functional admixtures, additions and fibres, which can be the same as the other optional component mentioned above defined in the detailed description of the binder composition.

The total content of these optional other components in the dry industrial mortar composition is preferably comprised between 0.1% and 10% by weight of the total weight of the hydraulic binder composition.

*The wet building material formulation*

The invention also refers to a wet building material formulation in particular, concrete, especially bagged concrete and industrial mortars such as tile adhesive, coating, masonry industrial mortar, repair industrial mortar, render, bagged cement, technical industrial mortar, industrial mortars for floor covering or waterproofing membrane, comprising at least one aggregate, the hydraulic binder composition described above and water.

In a specific embodiment, wet building material formulations are so called "Ready to use" industrial mortars. "Ready to use" industrial mortars are used for assembling bricks or blocks on building site. They are obtained by mixing all the elements of the composition (hydraulic binder, aggregates and other components) with water directly at the mixing plant. They include a set retarding agent, allowing transport and delayed use up to several days, while maintaining its rheological and hardening properties.

*The process for preparing wet building material formulation*

The invention also relates to a process for preparing the wet building material formulation described above comprising a step of mixing with water the hydraulic binder composition described above, the hydraulic binder composition being prepared before the mixing step or in situ during the mixing step the different components of the hydraulic binder composition taken separately and/or under the form of premix(es), and at least one aggregate and

In other words, wet industrial mortar formulation could be prepared by two distinct methods.

In a first method, the hydraulic binder composition is prepared, and then mixed with the at least one aggregate and with other optional components, according to the final dry building application The dry building material is thereafter mixed with water.

In a second method, the wet building material formulation is prepared by mixing in water each component of the hydraulic binder composition and the aggregates.

According to the present disclosure, the term "mixing" must be understood as any form of mixing.

In a preferred embodiment a part of the binder composition and at least a part of the water are mixed prior to the mixing with the aggregate.

In a preferred embodiment, the process is implemented with a weight ratio water to hydraulic binder composition comprised between 0.1 and 1, advantageously between 0.15 and 0.7, and more advantageously between 0.2 and 0.5. As it is evidenced by the examples below, the ratio water to binder depends on the purpose of the type of building material.

*Hardened building material product*

The present invention also refers to hardened building material product obtained from the wet building material formulation described above.

**Examples**

*Example 1: the synergistic effect of the particle size distribution of the filler particle and the particle size distribution of the whole hydraulic binder*

Three hydraulic binder composition have been prepared. The compositions are set forth in table 1 below:

Table 1

| | | E1 | CE1 | CE2 |
|---|---|---|---|---|
| Component a (dry weight%): Portland cement | | 18.97 | 18.97 | 19.17 |
| Component b (dry weight%) | GGBS | 28.56 | 28.56 | 30.30 |
| Component c (dry weight%) | Ultrafine limestone filler ($d_{50}$ < 2μm) | 4.89 | 0 | 0 |
| | Fine Limestone filler (2 μm ≤ $d_{50}$ < 6 μm) | 47.55 | 52.44 | 50.51 |
| Component d (dry weight% relative to components a, b and c total weight) $CaSO_4$ (anhydrite) | | 1.96 | 1.96 | 1.97 |
| $D_{10}$ of the binder | | 0.83 | 0.84 | 0.85 |
| $D_{50}$ of the binder | | 4.22 | 4.41 | 4.73 |
| $D_{85}$ of the binder | | 13.87 | 14.94 | 16.71 |

These three hydraulic binders have then been mixed with water. Then the water needed to wet the powder has been measured according to the Beta P test.

Beta P test consists of a truncated cone shape mold filled by the paste, in two layers, and placed on a glass plate. Then, the mold is lifted, and the spread is measured, by means of its diameters, to obtain a mean value between 140 mm and 280 mm. The procedures are then repeated for other proportions of material and of water, until enough points are reached to display the linear relation of the Figure 1.

Then, through the measurements of the average diameters (D) of the spread, the relative flow area (R) is computed with eq1.

$$R=\frac{(D^2-100^2)}{100^2} \ldots\ldots (eq1)$$

According to figure 1, a linear relationship is obtained between the relative flow area and the ratio between the water volume and the powder volume.

The ratio between the water and powder is computed through eq 2, in which there is a clear dependency with the relative flow area (R).

$$V_W/V_P = \beta_P + R * E_p \ldots\ldots (eq2)$$

The $\beta_p$ represents the water ratio, which considers the water inside the pores of the material's particles and the interstitial one between the grains. Thus, it represents the minimum quantity of water needed for a powder to become a paste. While the EP, defined as the deformation coefficient, describes the sensitivity of the paste's fluidity with the variation of water content.

As can be seen on figure 1, the ratio of water/powder volume needed to form a paste with the binder according to the invention (E1) is of about 1.26, while the ratio/powder volume of water needed to form a paste with the binders outside the invention is of about 1.35 for both binder CE1 and CE2.

Binder CE1 does not contain filler particles having a $d_{50}$ greater than or equal to 0,05μm and strictly less than 2μm,but has a $d_{10}$ less than or equal to 1μm, a $d_{50}$ comprised between 3.5μm and 4.5 μm and a $d_{85}$ comprised between 12μm and 15μm.

Binder CE2 neither contains filler particles having a $d_{50}$ greater than or equal to 0,05μm and strictly less than 2μm, neither has a $d_{50}$ comprised between 3.5μm and 4.5 μm and a $d_{85}$ comprised between 12μm and 15μm.

As a result, the overall particle size distribution of the binder is not enough to reduce the quantity of water needed, the presence of a filler particles having a $d_{50}$ greater than or equal to 0,05μm and strictly less than 2μm in the quantity according to the invention is also mandatory.

*Example 2: Tile adhesive mortar comprising a binder according to the invention*

A tile adhesive mortar has been prepared by mixing a binder with additives as detailed in table 2 below.

Table 2

| | |
|---|---|
| Binder composition (dry weight%) | 45.1 |
| Redispersable powder (dry weight%) | 2.5 |
| Cellulose ether | 0.3 |
| Sand (dry weight%) | 52.1 |
| Water/binder ratio | 0.24 |

The binder having the following composition (table 3):

Table 3

| | | E2 |
|---|---|---|
| Component a (dry weight%): Portland cement | | 18.05 |
| Component b (dry weight%) | GGBS | 27.24 |

(continued)

| | | E2 |
|---|---|---|
| Component c (dry weight%) | Ultrafine limestone filler ($d_{50}$ < 2 μm) | 4.66 |
| | Fine Limestone filler (2 μm ≤ $d_{50}$ < 6 μm) | 50.09 |
| Component d (dry weight% relative to components a, b and c total weight) $CaSO_4$ (anhydrite) | | 1.9 |

The strength evolution with a storage of (20 ± 2) °C and (50 ± 5) % relative humidity of hardened tile adhesive are conducted at 24h, 7 days, 14 days and 28 days to study.

After 7 days of drying under dry conditions of (20 ± 2) °C and (50 ± 5) % relative humidity, test units are immersed in water at the standard temperature. After 20 days, tests units are removed from water and wiped with a cloth to bond the pull-head plates to the tiles. After a further 24h, necessary to the drying of the adhesive, the tests units are immersed in water. At 28 days, the tests units are removed from water and immediately pulled off with the tensile testing machine for water measurement.

After 14 days of drying under conditions of (20 ± 2) °C and (55 ± 5) % relative humidity, test units are placed in an air-circulating oven at (70 ± 3) °C for a further 14 days. Then, they are removed from the oven to bond the pull-head plates to the tiles and placed under standard conditions during still 24h, necessary to the drying of the adhesive. At 28 days, test units are pulled off with the tensile testing machine for heat measurement.

The adhesive strength of the hardened tile adhesive conforms to the standard EN12004 as C1TE type, as can be seen on figure 2.

*Example 3: Bagged concrete comprising a binder according to the invention*

A bagged concrete has been prepared by mixing the binder composition of example E1 in water containing a water reducing polymer (0.6% dry weight relative to the total weight of components a, b and c), the water/binder ratio being of 0,37.

The compressive strength of this masonry mortar has been determined according to standard NF EN 198-1 of December 2016.

As can be seen on figure 3, the compressive strength after 1 day of hardening of the bagged concrete is of 10.8 MPa, and of 44.7 MPa after 7 days. As a result the bagged concrete is classified as a C30 (at least 30Mpa at 28 days).

*Example 4: Masonry mortar comprising a binder according to the invention*

A masonry mortar has been prepared by mixing a binder in water in the proportion detailed in table 4 below.

Table 4

| | |
|---|---|
| Binder composition (dry weight%) | 21 |
| Air entrainer | 0.02 |
| Sand 0-2.5 (dry weight%) | 78.98 |
| Water/binder ratio | 0.13 |

The binder having the following composition (table 5):

Table 5

| | | E3 |
|---|---|---|
| Component a (dry weight%): | Portland cement | 17.71 |
| | Lime | 4.76 |
| Component b (dry weight%) | Standard GGBS ($d_{50}$ = 10 μm) | 15.14 |
| | Ultrafine GGBS ($d_{50}$ < 2.5 μm) | 11.52 |

(continued)

| | | E3 |
|---|---|---|
| Component c (dry weight%) | Ultrafine limestone filler (0.5 µm ≤ $d_{50}$ < 2 µm) | 4.57 |
| | Fine Limestone filler (2 µm ≤ $d_{50}$ < 6 µm) | 44.38 |
| Component d (dry weight% relative to components a, b and c total weight) $CaSO_4$ (anhydrite) | 2 | |

The compressive strength of this masonry mortar has been determined according to standard NF EN 198-1 of December 2016.

As can be seen on figure 4, the compressive strength after 1 day of hardening of the masonry mortar is of 1,6 MPa, after 7 days of 9 MPa, and of 16.23MPa after 28 days. As result the masonry mortar is classified as a M15 (a compressive strength of at least 15MPa at 28 days) according to standard NF EN 998-1 December 2016.

*Example 5: Repair mortar comprising a binder according to the invention*

A repair mortar has been prepared by mixing a binder with additives as detailed in table 6 below.

Table 6

| | |
|---|---|
| Binder composition (dry weight%) | 40 |
| Redispersable powder (dry weight%) | 2 |
| Fiber (dry weight%) | 0.1 |
| Sand 0/2mm (dry weight%) | 58 |
| Water (weight%) | 13.5 |
| Water/binder ratio | 0.45 |

The binder having the following composition (table 7):

Table 7

| | | E4 |
|---|---|---|
| Component a (dry weight%): | Portland cement | 13.57 |
| Component b (dry weight%) | Standard GGBS ($d_{50}$ = 10 µm) | 11.6 |
| | Ultrafine GGBS ($d_{50}$ < 2.5 µm) | 8.83 |
| Component c (dry weight%) | Ultrafine limestone filler (0.5 µm ≤ $d_{50}$ < 2 µm) | 3.5 |
| | Fine Limestone filler (2 µm ≤ $d_{50}$ < 6 µm) | 34.01 |
| | Standard Limestone filler (6 µm ≤ $d_{50}$ < 60 µm) | 25 |
| Component d (dry weight% relative to components a, b and c total weight) $CaSO_4$ (anhydrite) | | 2 |

The compressive strength of this masonry mortar has been determined according to standard NF EN 196-1. The compressive strength is of 1.8MPa at 1 day, 9.5 MPa at 7d and 16.1MPa at 28 days.

As can be seen on figure 5, the compressive strength after 1 day of hardening of the repair industrial mortar is of 4.5 MPa, after 7 days of 17.5 MPa, and of 32 MPa after 28 days. As result the repair industrial mortar is classified as a R2 (a compressive strength of at least 15MPa and an adhesive strength of at least 0.80MPa at 28 days) according to standard EN1504.

*Example 6: Water proofing membrane comprising a binder according to the invention*

A water proofing membrane has been prepared by mixing the binder of example E1 and additives in water containing a latex (Plextol D5241 from Synthomer) and a water reducing polymer (0.2% dry weight relative to the total weight of components a, b and c), as detailed in table 8 below.

Table 8

| | |
|---|---|
| Binder composition (dry weight%) | 39.6 |
| Cellulose ether (dry weight%) | 0,12 |
| Antifoam (dry weight%) | 0,02 |
| Sand 0/4mm (dry weight%) | 59.4 |
| Added Water (weight%) | 4.7 |
| Water reducing polymer | 0.2 |
| Liquid Latex (weight%) | 28.9 |

The strength evolution with a storage of (20 ± 2) °C and (50 ± 5) % relative humidity of hardened tile adhesive are conducted at 7 days, 14 days and 28 days to study.

After 7 days of drying under dry conditions of (20 ± 2) °C and (50 ± 5) % relative humidity, test units are immersed in water at the standard temperature. After 20 days, tests units are removed from water and wiped with a cloth to bond the pull-head plates to the tiles. After a further 24h, necessary to the drying of the membrane, the tests units are immersed in water (water). At 28 days, the tests units are removed from water and immediately pulled off with the tensile testing machine for WATER measurement.

After 14 days of drying under conditions of (20 ± 2) °C and (55 ± 5) % relative humidity, test units are placed in an air-circulating oven at (70 ± 3) °C for a further 14 days. Then, they are removed from the oven and placed under standard conditions during still 24h, necessary to the drying of the membrane (Heat).

As can be seen on figure 6, the adhesive strength after 7 days of hardening of the water proofing membrane, of 0.78 MPa after 28 days of drying under standard conditions of (20 ± 2) °C and (50 ± 5) % relative humidity, of 0.5 MPa after 28 days (under water), 0.96 MPa after 28 days (Heat). Water immersion tests are carried on. Waterproofing membranes are poured on a non-adhesive sheet and let dry for 24 hours. They are removed from the adhesive sheet and let dry until 7 days at 20°C/50%RH. Then, 6 squares of $25cm^2$ are cut and 5 are immersed in water for 21 days. As can be seen on figure 7, the percentage of water intake is less than 16% after 21 days.

The adhesive strength and the water intake of the waterproofing membrane conform to the standard.

## Claims

1. Hydraulic binder composition for dry building material, having a $d_{10}$ less than or equal to 1μm, a $d_{50}$ comprised between 3.5μm and 4.5 μm and a $d_{85}$ comprised between 12μm and 15μm, comprising:

   a. between 1% and 40% in dry weight of at least one lime source;
   b. between 5% and 69% in dry weight of at least one supplementary cementitious material;
   c. between 30% and 90% in dry weight of at least one filler;
   d. between 0.1% and 5% in dry weight, relative to the total weight of components a, b and c, of sulfate;

   said filler being a particles mixture of:

   - between 1% and 25% in dry weight, in respect with the total weight of the filler, of particles having a $d_{50}$ greater than or equal to 0,05μm and strictly less than 2μm,
   - between 75% and 99% in dry weight, in respect with the total weight of the filler, of particles having a $d_{50}$ greater than or equal to 2μm less than 200μm,

   measurement of $d_{10}$, $d_{50}$ and $d_{80}$ being done by Laser diffraction analysis, also known as Laser diffraction spectroscopy, by means of Laser diffraction analyzer such as " SYMPATEC " and commercialized by the SYMPATEC company, with the dry way method.

2. Hydraulic binder composition according to claim 1, wherein it has a d90 comprised between 17μm and 20μm, measurement of d90 being done by Laser diffraction analysis, also known as Laser diffraction spectroscopy, by means of Laser diffraction analyzer such as " SYMPATEC " and commercialized by the SYMPATEC company, with the dry way method.

**3.** Hydraulic binder composition according to anyone of the preceding claims, wherein it has a d99 equal or less 38μm, measurement of d99 being done by Laser diffraction analysis, also known as Laser diffraction spectroscopy, by means of Laser diffraction analyzer such as " SYMPATEC " and commercialized by the SYMPATEC company, with the dry way method.

**4.** Hydraulic binder composition according to anyone of the preceding claims, wherein the lime source is Portland clinker, Portland cement, or lime, such as hydraulic lime, natural hydraulic lime calcium hydroxide, slaked lime, quick lime and lime slurry, or a mixture thereof.

**5.** Hydraulic binder composition according to anyone of the preceding claims, wherein the supplementary cementitious material is selected in the group comprising, preferably consisting in, slag cement such as ground, granulated blast-furnace slag (GGBS), and pozzolanic material such as silica fumes, natural pozzolan, volcanic ash, pumice, zeolitized tuff, argilised tuff, fly ashes, calcinated schists, metakaolin, calcined clays in particular illite, bentonite, montmorillonite, smectite, biomass ashes, rice husk ashes, diatomaceous earth, waste glass powder, grounded opal, carbonated basic oxygen furnace slag, carbonated olivine, carbonated wollastonite and mixtures thereof.

**6.** Hydraulic binder composition according to anyone of the preceding claims, wherein the filler is a natural material sourcing from stone-pit, such as calcite and its polymorphs, like aragonite or vaterite, marble filler, recycled concrete fines and dolomite or precipitated calcium carbonates and mixtures thereof.

**7.** Hydraulic binder composition according to anyone of the preceding claims, wherein the sulfate is from sodium sulfate, potassium sulfate, calcium sulfate, anhydrite, recycling gypse or mixture thereof.

**8.** Dry building material, comprising between 0.5% and 60% in dry weight of the hydraulic binder composition according to any one of claims 1 to 9, and between 40% and 99.5% in dry weight of granulates.

**9.** Dry building material according to claim 8, **characterized in that** it is concrete, especially bagged concrete or an industrial mortar such as tile adhesive, coating, masonry industrial mortar, repair industrial mortar, render, bagged cement, technical industrial mortar, industrial mortars for floor covering or waterproofing membrane.

**10.** Wet building material formulation comprising the dry building material according to anyone of claims 8 and 9 and water.

**11.** Hardened building material product obtained from the wet building material formulation according to claim 10.

**12.** Process for preparing the wet building material formulation according to claim 10 comprising a step of mixing with water, the hydraulic binder composition according to any one of claims 1 to 7, the hydraulic binder composition being prepared before the mixing step or in situ during the mixing step the different components of the hydraulic binder composition taken separately and/or under the form of premix(es) and at least one aggregate.

[Fig. 1]

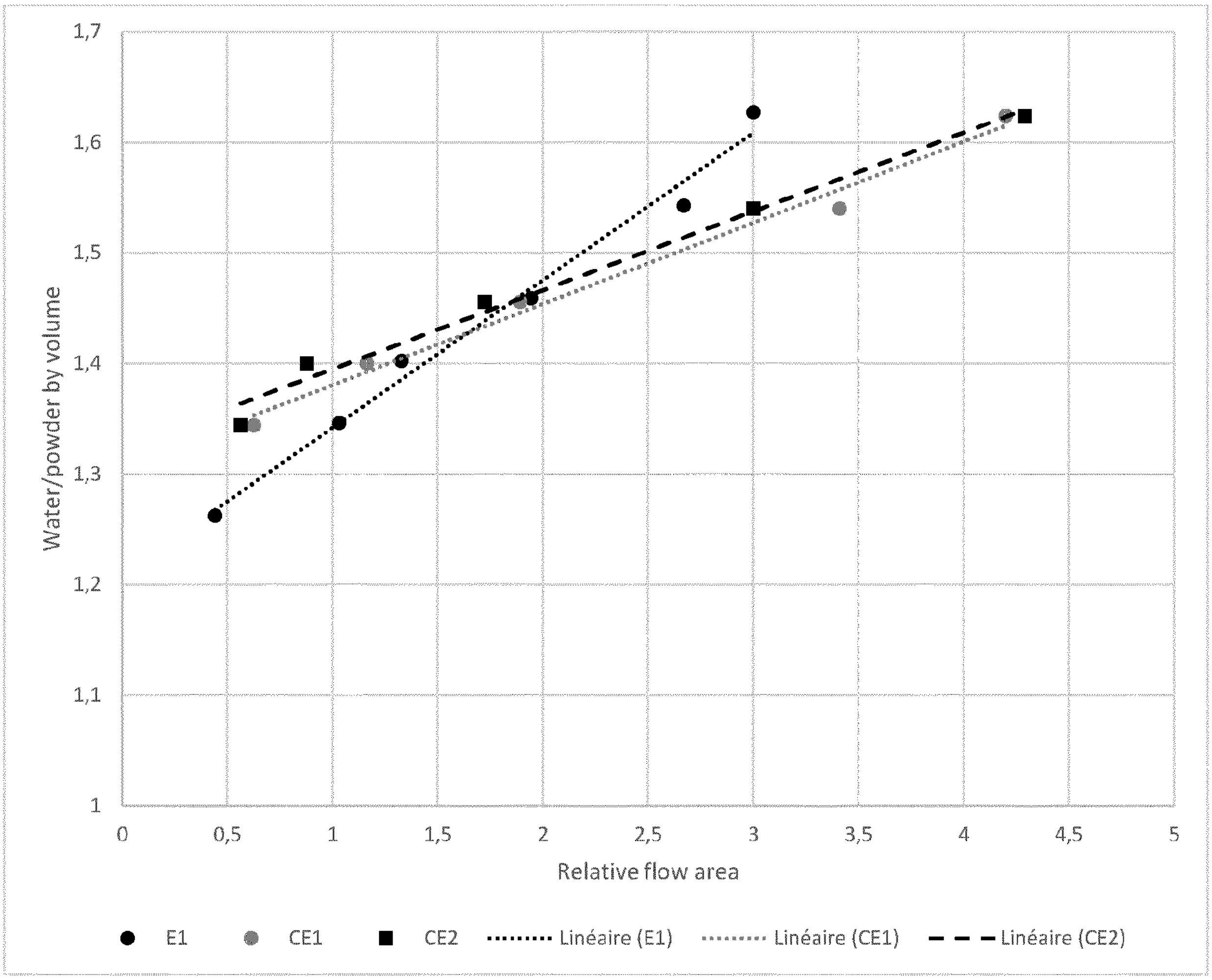
1,7
1,6
1,5
1,4
1,3
1,2
1,1
1
Water/powder by volume
0
0,5
1
1,5
2
2,5
3
3,5
4
4,5
5
Relative flow area
E1
CE1
CE2
Linéaire (E1)
Linéaire (CE1)
Linéaire (CE2)

[Fig. 2]

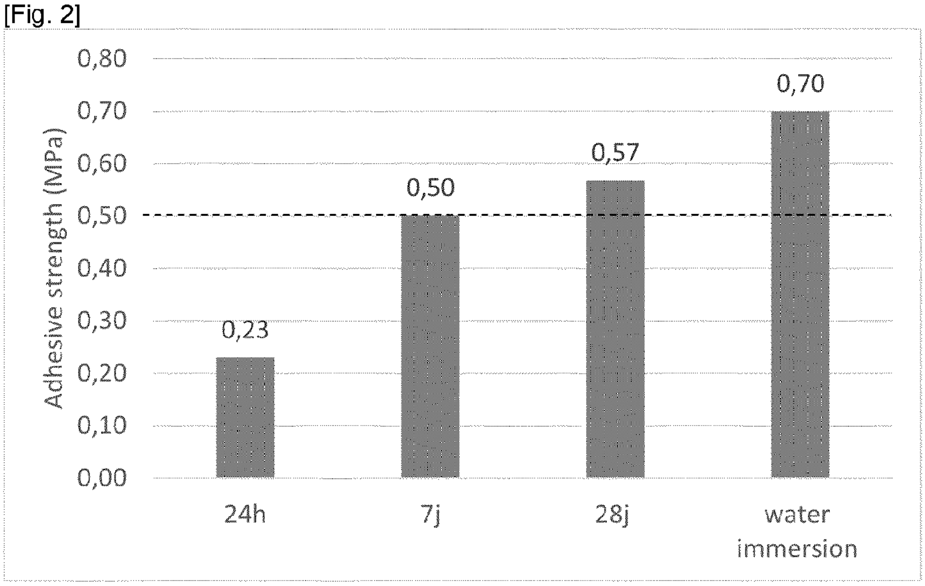
0,80
0,70
0,60
0,50
0,40
0,30
0,20
0,10
0,00
Adhesive strength (MPa)
0,23
0,50
0,57
0,70
24h
7j
28j
water immersion

[Fig. 3]

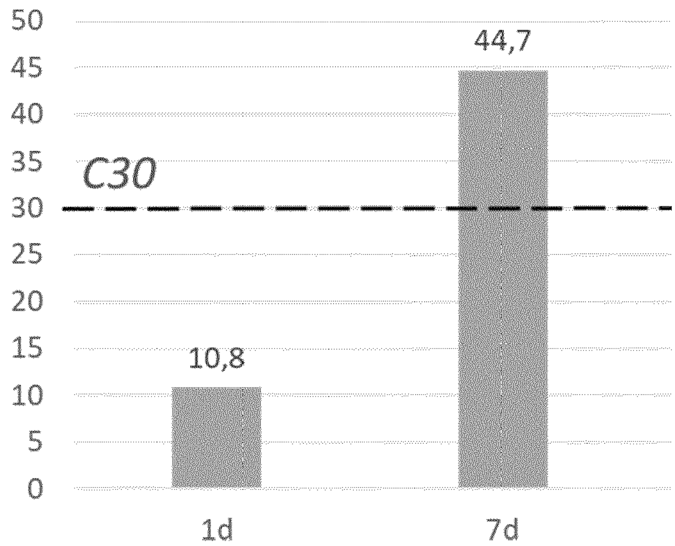
50
45
40
35
30
25
20
15
10
5
0
C30
44,7
10,8
1d
7d

[Fig. 4]

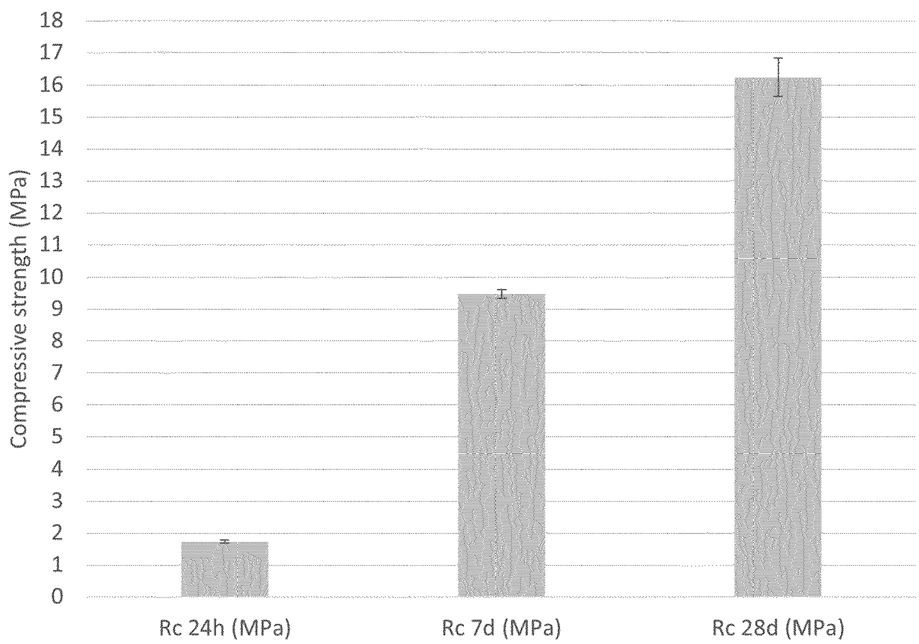
Compressive strength (MPa)
18
17
16
15
14
13
12
11
10
9
8
7
6
5
4
3
2
1
0
Rc 24h (MPa)
Rc 7d (MPa)
Rc 28d (MPa)

[Fig. 5]

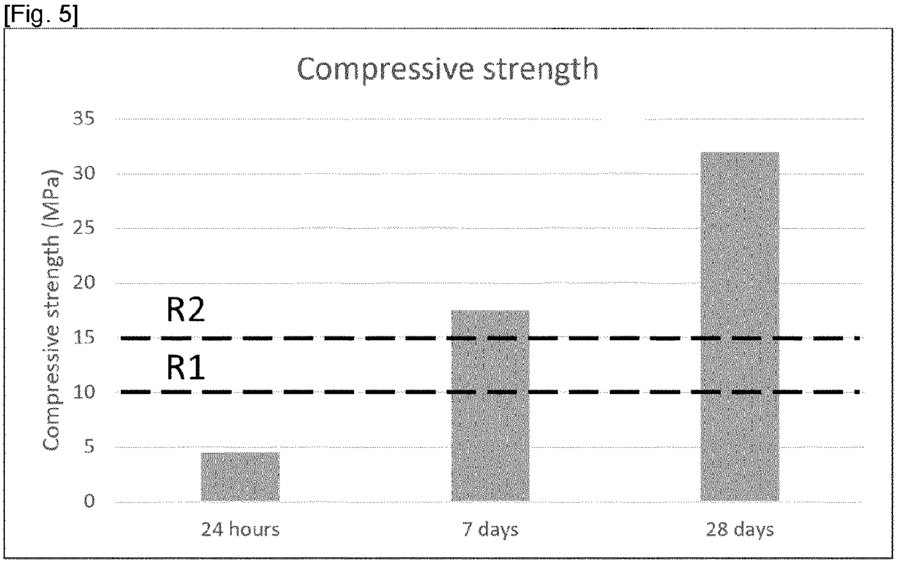
Compressive strength
Compressive strength (MPa)
35
30
25
20
15
10
5
0
R2
R1
24 hours
7 days
28 days

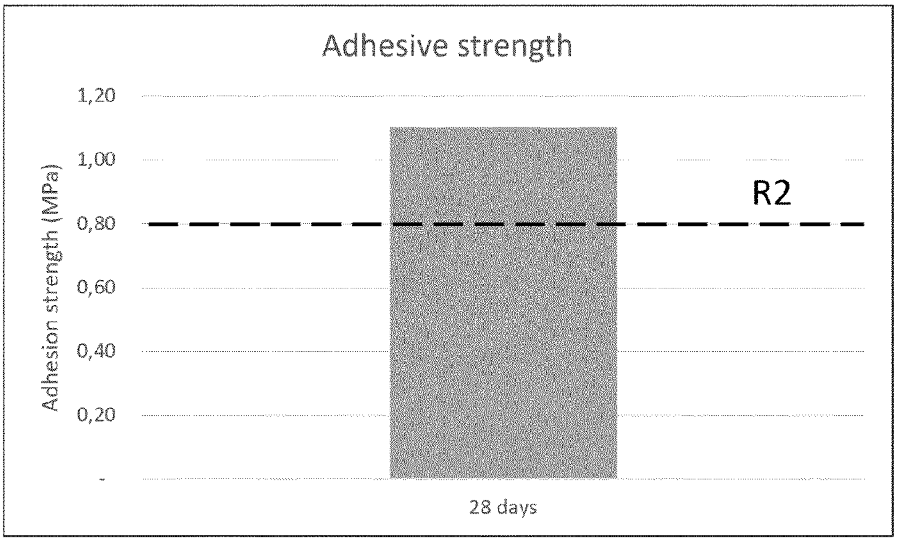
Adhesive strength
Adhesion strength (MPa)
1,20
1,00
0,80
0,60
0,40
0,20
-
R2
28 days

[Fig. 6]

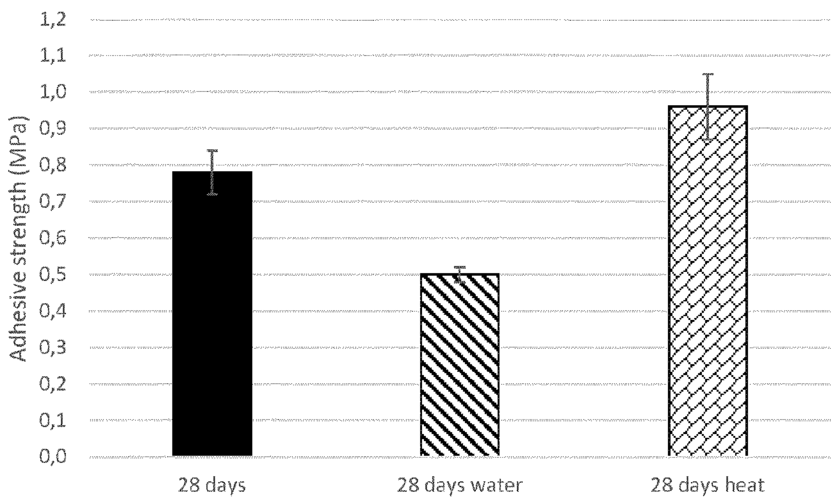
Adhesive strength (MPa)
1,2
1,1
1,0
0,9
0,8
0,7
0,6
0,5
0,4
0,3
0,2
0,1
0,0
28 days
28 days water
28 days heat

[Fig. 7]

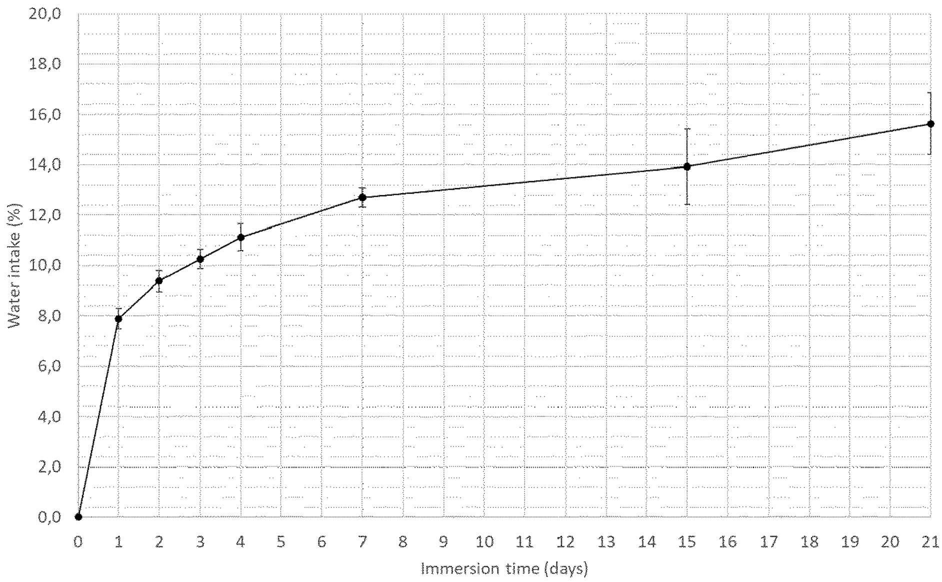
20,0
18,0
16,0
14,0
12,0
10,0
8,0
6,0
4,0
2,0
0,0
Water intake (%)
0 1 2 3 4 5 6 7 8 9 10 11 12 13 14 15 16 17 18 19 20 21
Immersion time (days)

Europäisches Patentamt
European Patent Office
Office européen des brevets

# EUROPEAN SEARCH REPORT

Application Number
EP 23 21 8881

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 082 988 A1 (ECOCEM MAT LIMITED [IE] ET AL.) 2 November 2022 (2022-11-02)<br>* paragraph [0018] - paragraph [0072] *<br>----- | 1-12 | INV.<br>C04B28/04<br>C04B28/10<br>C04B28/12<br>C04B111/00<br>C04B111/27<br>C04B111/60<br>C04B111/72<br>C04B20/00<br>C04B103/00<br>C04B40/06<br>C04B18/14<br>C04B14/14<br>C04B14/16<br>C04B14/04<br>C04B18/08<br>C04B14/12<br>C04B14/10 |
| A | US 2014/299023 A1 (GUYNN JOHN M [US] ET AL) 9 October 2014 (2014-10-09)<br>* the whole document *<br>----- | 1-12 | |
| A | US 2017/121227 A1 (PEREZ FABIEN [FR] ET AL) 4 May 2017 (2017-05-04)<br>* the whole document *<br>----- | 1-12 | |
| | | | TECHNICAL FIELDS SEARCHED (IPC) |
| | | | C04B |

The present search report has been drawn up for all claims

1

| Place of search | Date of completion of the search | Examiner |
|---|---|---|
| Munich | 21 June 2024 | Kresoja, Radoje |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 23 21 8881

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | | | C04B18/10<br>C04B14/08<br>C04B14/22<br>C04B14/28<br>C04B14/06<br>C04B14/26<br>C04B18/167 |
| | | | TECHNICAL FIELDS SEARCHED (IPC) |

The present search report has been drawn up for all claims

1

| Place of search | Date of completion of the search | Examiner |
|---|---|---|
| Munich | 21 June 2024 | Kresoja, Radoje |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................................................
& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO. EP 23 21 8881

This annex lists the patent family members relating to the patent documents cited in the above-mentioned European search report. The members are as contained in the European Patent Office EDP file on
The European Patent Office is in no way liable for these particulars which are merely given for the purpose of information.

21-06-2024

| Patent document cited in search report | Publication date | Patent family member(s) | Publication date |
|---|---|---|---|
| EP 4082988 A1 | 02-11-2022 | AR 125737 A1 | 09-08-2023 |
| | | AU 2022265539 A1 | 09-11-2023 |
| | | BR 112023022455 A2 | 02-01-2024 |
| | | CA 3215469 A1 | 03-11-2022 |
| | | CN 117813273 A | 02-04-2024 |
| | | EP 4082988 A1 | 02-11-2022 |
| | | EP 4330208 A1 | 06-03-2024 |
| | | JP 2024516675 A | 16-04-2024 |
| | | US 2024190770 A1 | 13-06-2024 |
| | | WO 2022229433 A1 | 03-11-2022 |
| US 2014299023 A1 | 09-10-2014 | NONE | |
| US 2017121227 A1 | 04-05-2017 | BR 112016029622 A2 | 22-08-2017 |
| | | CN 106660878 A | 10-05-2017 |
| | | EP 3157883 A1 | 26-04-2017 |
| | | ES 2691215 T3 | 26-11-2018 |
| | | FR 3022541 A1 | 25-12-2015 |
| | | US 2017121227 A1 | 04-05-2017 |
| | | WO 2015193444 A1 | 23-12-2015 |

EPO FORM P0459

For more details about this annex : see Official Journal of the European Patent Office, No. 12/82